(19) Europäisches Patentamt

European Patent Office

Office européen des brevets

(11) Veröffentlichungsnummer: **0 189 075**
**A2**

(12) **EUROPÄISCHE PATENTANMELDUNG**

(21) Anmeldenummer: **86100304.4**

(22) Anmeldetag: **11.01.86**

(51) Int. Cl.⁴: **B 60 D 1/20**

(30) Priorität: **14.01.85 DE 3500964**

(43) Veröffentlichungstag der Anmeldung: **30.07.86**
**Patentblatt 86/31**

(84) Benannte Vertragsstaaten: **AT CH DE FR GB IT LI**

(71) Anmelder: **Hagen, Werner, Hauptstrasse 46/47,**
**D-5464 Asbach/Bennau (DE)**

(72) Erfinder: **Hagen, Werner, Hauptstrasse 46/47,**
**D-5464 Asbach/Bennau (DE)**

(74) Vertreter: **Kossobutzki, Walter, Dipl.-Ing., Waldstrasse 6,**
**D-5419 Helferskirchen (DE)**

(54) **Stange, insbesondere Abschleppstange für Kraftfahrzeuge.**

㊗ Eine Stange (1), insbesondere Abschleppstange für Kraftfahrzeuge, weist an den Stirnseiten derselben angeordnete und beispielsweise dem Anschluss oder der Befestigung dienende Endglieder (2, 3) auf.

Um eine solche Stange (1) preiswert herzustellen und auf kleinstem Raum durch Zusammenrollen unterzubringen, sind die beiden Endglieder (2, 3) durch ein Seil (5) fest miteinander verbunden, zwischen den beiden Endgliedern (2, 3) sind eine Vielzahl von hülsenartigen und gegeneinander zentrierbaren Einzelgliedern (6), deren Gesamtlänge kürzer als der Abstand zwischen den beiden Endgliedern (2, 3) ist, auf dem Seil (5) aufgereiht und zumindest ein Glied (2 ,3) ist als Spannglied ausgebildet, durch das alle Einzelglieder (6) sowohl untereinander als auch mit den beiden Endgliedern (2, 3) bei gleichzeitiger Spannung des Seiles (5) verspannbar sind.

ACTORUM AG

- **I** -

H 133

Werner Hagen, Hauptstraße 46/47, 5464 Asbach/Bennau

Stange, insbesondere Abschleppstange für Kraftfahrzeuge

Die Erfindung bezieht sich auf eine Stange, insbesondere Abschleppstange für Kraftfahrzeuge, mit zwei an den Stirnseiten derselben angeordneten und beispielsweise dem Anschluß oder der Befestigung dienenden Endgliedern.

Es sind Abschleppstangen für Kraftfahrzeuge bekannt, die aus einem durchgehenden, also einstückigen Rohr bestehen, an dessen Ende als Ösen ausgebildete Endglieder befestigt sind, über die die Abschleppstange einerseits an dem abschleppenden und andererseits an dem abgeschleppten Kraftfahrzeug befestigt bzw. eingehängt werden kann. Eine derartige Abschleppstange ist zwar preiswert herzustellen, jedoch für eine Mitnahme in einem Kraftfahrzeug, beispielsweise einem Personenkraftwagen, ungeeignet.

Es ist ferner eine Abschleppstange bekannt, die aus mehreren Rohrstücken mit unterschiedlichem Durchmesser besteht, wobei sich die einzelnen Rohrstücke teleskopartig ineinander schieben lassen. Auch hier sind die beiden End-Rohrstücke mit einer Befestigungsöse oder dergleichen versehen. Eine derartige Abschleppstange läßt sich nach dem Zusammenschieben platzsparend im Kraftfahrzeug mitnehmen; sie hat jedoch den Nachteil, daß ihre Herstellung verhältnismäßig aufwendig und damit teuer ist.

Der Erfindung liegt deshalb die Aufgabe zugrunde, eine Stange, insbesondere eine Abschleppstange für Kraftfahrzeuge zu schaffen, die einerseits preiswert hergestellt und andererseits auf geringstem Raum in einem Kraftfahrzeug verstaut bzw. untergebracht werden kann.

Zur Lösung dieser Aufgabe wird bei einer Stange der eingangs beschriebenen Gattung vorgeschlagen, daß die beiden Endglieder durch ein Seil fest miteinander verbunden sind, daß zwischen den beiden Endgliedern eine Vielzahl von hülsenartigen und gegeneinander zentrierbaren Einzelgliedern, deren Gesamtlänge kürzer als der Abstand zwischen den beiden Endgliedern ist, auf dem Seil aufgereiht sind und daß zumindest ein Glied als Spannglied ausgebildet ist, durch das alle Einzelglieder sowohl untereinander als auch mit den beiden Endgliedern bei gleichzeitiger Spannung des Seiles verspannbar sind.

Eine derartige Stange bzw. Abschleppstange hat den Vorteil, daß sie einerseits für den Transport im Kraftfahrzeug ähnlich wie ein Seil zusammengerollt und damit auf kleinstem Raum untergebracht werden kann. Für den eigentlichen Abschleppvorgang werden die einzelnen Glieder der Stange fest miteinander verspannt, so daß eine starre Stange entsteht, die beim Abschleppen ein Auffahren des abzuschleppenden Kraftfahrzeuges selbst in kritischen Verkehrssituationen ausschließt.

Weitere Merkmale der Erfindung sind in den Ansprüchen 2 - 9 offenbart.

Die Erfindung wird nachfolgend anhand in einer Zeichnung dargestellter Ausführungsbeispiele näher erläutert. Dabei zeigen

Fig. 1    eine Draufsicht auf eine nur teilweise dargestellte Abschleppstange gemäß der Erfindung,

Fig. 2    einen Schnitt durch ein als Spannglied ausgebildetes Endglied der Abschleppstange der Fig. 1,

Fig. 3    eine andere Ausbildung eines als Spannglied ausgebildeten Endgliedes und

Fig. 4    eine weitere Ausbildung eines Endgliedes.

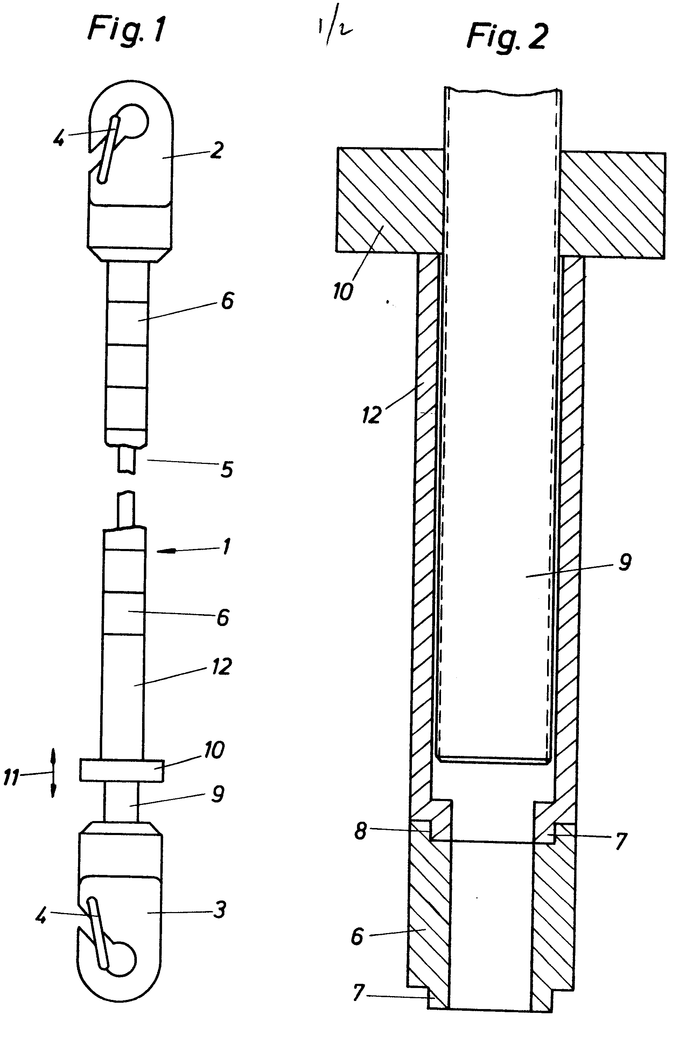

Die in der Fig. 1 der Zeichnung dargestellte Abschleppstange 1 besteht aus zwei Endgliedern 2,3, die in diesem Ausführungsbeispiel direkt als Befestigungsöse ausgebildet und mit einem schwenkbaren Sperrhebel 4 versehen sind. Über diese Endglieder 2,3 kann die Abschleppstange 1 in an sich bekannter Weise sowohl an einem Schleppfahrzeug als auch an einem abzuschleppenden Kraftfahrzeug eingehängt bzw. befestigt werden. Zwischen den beiden Endgliedern 2,3 ist ein nur angedeutetes Seil 5 vorgesehen, welches in an sich bekannter, nicht dargestellter Weise fest und damit unlösbar mit den Endgliedern 2,3 verbunden ist. Auf dem Seil 5 sind eine Vielzahl von hülsenartigen Einzelgliedern 6 - ähnlich wie bei einer Perlenkette - aufgereiht, die an einer Stirnfläche einen umlaufenden Vorsprung 7 aufweisen, während die andere Stirnfläche mit einer dem umlaufenden Vorsprung 7 angepaßten Vertiefung 8 versehen ist. Dadurch können die Einzelstücke 6 zentrierend zu einem Rohr zusammengesteckt werden.

Die freie Länge des Seiles 5 zwischen den beiden Endgliedern 2,3 ist im ungespannten Zustand des Seiles 5 größer als die Länge aller zusammengesteckten Einzelglieder 6.

Im vorliegenden Ausführungsbeispiel ist das Endglied 3 als Spannglied ausgebildet, welches in seiner wirksamen Länge verändert werden kann. Dazu ist in das Endglied 3 ein mit Außengewinde versehenes Rohr 9 eingesetzt, welches fest mit dem Endglied 3 verbunden ist. Auf diesem Rohr 9 ist eine Mutter 10 angeordnet, die sich durch Drehung in Richtung des Doppelpfeiles 11 auf dem Rohr 9 verschieben läßt. Der Mutter 10 ist in diesem Ausführungsbeispiel eine besondere Spannhülse 12 vorgeordnet, die mit ihrem anderen Ende mit einem Einzelglied 6 zusammenwirkt. Durch entsprechendes Drehen der Mutter 10 werden alle Einzelglieder 6 sowohl untereinander als auch mit den beiden Endgliedern 2,3 bzw. der Hülse 12 verspannt. Dabei wird gleichzeitig das Seil 5 gespannt, so daß eine starre Abschleppstange 1 entsteht. Wird nun die Mutter 10 wieder in die andere Richtung gedreht, wird die vorbeschriebene Verspannung so weit aufgelöst, daß die Einzelglieder 6 frei auf dem Seil 5 bewegbar sind. Dadurch ergibt sich die Möglichkeit, daß die Abschleppstange 1 zusammengerollt und damit auf kleinstem Raum untergebracht werden kann.

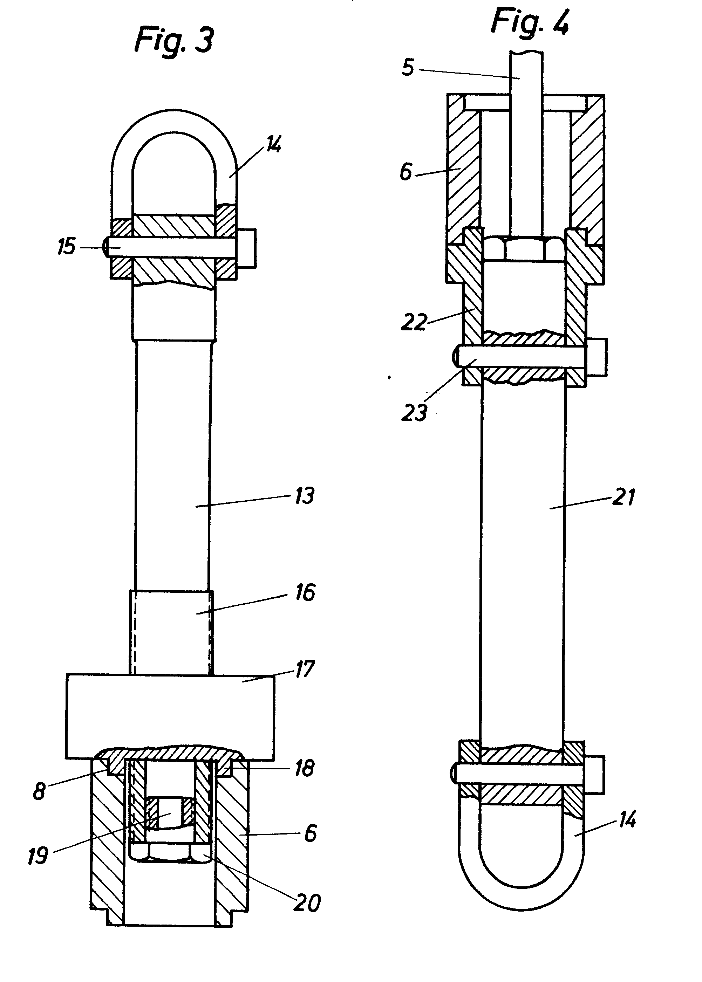

In der Fig. 3 der Zeichnung ist ein stangenförmiges Endglied 13 gezeigt, welches an einem Ende einen Anschlußbügel 14 aufnehmen kann, der mittels eines Stiftes 15 mit dem Endglied 13 lösbar verbunden ist. In seiner gezeichneten Stellung kann der Stift 15 beispielsweise mittels einer nicht dargestellten Federklammer in seiner Lage gesichert werden.

Das andere Ende des stangenförmigen Endgliedes 13 ist rohrartig ausgebildet und an seiner Außenfläche mit Gewinde 16 versehen. Auf diesem Gewinde 16 ist eine Mutter 17 drehbar und damit axial verschiebbar gehalten, die mit einem umlaufenden Vorsprung 18 in die Vertiefung 8 der ihr benachbarten Hülse 6 eingreift. Die Länge des Gewindes 16 bildet hier die eigentliche Spannlänge der Abschleppstange 1. Zwischen dem Gewinde 16 und dem den Befestigungsbügel 14 tragenden Ende des stangenartigen Endteiles 13 weist dasselbe einen reduzierten Durchmesser auf, der es ermöglicht, daß die Mutter 17 in diesem Bereich frei, also ohne Drehung, axial verschoben werden kann. Dadurch wird, insbesondere bei einer längeren Abschleppstange 1 die Möglichkeit gegeben, daß sich alle Einzelglieder 6 im ungespannten Zustand frei auf dem Seil 5 bewegen können und die Abschleppstange 1 bzw. das Seil 5 dennoch zusammengerollt werden kann. Das rohrförmige und mit Außengewinde 16 versehene Ende des Endgliedes 13 nimmt im dargestellten Ausführungsbeispiel eine mit einer axialen Bohrung 19 versehene Schraube 20 auf, mittels der das Seil 5 im Endglied 13 befestigt werden kann.

Wenn beispielsweise für die Abschleppstange 1 eine große Spannlänge benötigt wird, kann ein Endglied 21 gemäß Fig. 4 ausgebildet sein. Hier nimmt das stangenförmige Endglied 21 eine Hülse 22 auf, die mit einem Einzelglied 6 zusammenwirkt. In der Spannstellung ist die Hülse 22 mittels eines Stiftes 23 fest mit dem Endglied 21 verbunden. Dabei kann auch dieser Stift 23 durch eine Federklammer in seiner Befestigungslage gesichert werden. Nach dem Entfernen des Stiftes 23 kann die Hülse 22 bis gegen den Befestigungsbügel 14 verschoben werden, so daß alle Einzelglieder 6 außer Eingriff kommen und die Stange 1 zusammengerollt werden kann. Nach Entfernen des Befestigungsbügels 14 kann die Hülse 22 mit ihrem Stift 23 in der Lage des Befestigungsbügels 14 gesichert werden.

Während das Seil 5 in vorteilhafter Weise aus Stahl besteht, sind die anderen Teile der Abschleppstange 1, beispielsweise die Endglieder, die Einzelglieder und die Mutter, aus Aluminium bzw. einer Aluminiumlegierung gefertigt, um zu vermeiden, daß die Abschleppstange 1 zu schwer wird. Diese Einzelteile können jedoch auch aus Kunststoff, insbesondere glasfaserverstärktem Kunststoff, hergestellt werden. Die Querschnitte müssen dann jedoch größer gewählt werden.

In Abänderung der Ausführungsbeispiele der Fign. 3 und 4 können die Endglieder 13, 21 auch mit einer durchgehenden axialen Bohrung, also vollkommen hohlzylindrisch ausgebildet sein. Das Spannen bzw. Vorspannen des Seiles 5 und damit das Verspannen der Einzelglieder 6 sowohl untereinander als auch mit den Endgliedern 2, 3 bzw. 13, 21 erfolgt in vorteilhafter Weise dann, wenn die Endglieder 2, 3, 13, 21 in den Kraftfahrzeugen eingehängt sind und das Seil 5 straff gezogen wurde.

Eine derartige Stange kann beispielsweise auch als Fahnenstange oder dgl. verwendet werden.

0189075

-1-

H 133

Werner Hagen, Hauptstraße 46/47, 5464 Asbach/Bennau

## Patentansprüche

1. Stange, insbesondere Abschleppstange für Kraftfahrzeuge, mit zwei an den Stirnseiten derselben angeordneten und beispielsweise dem Anschluß oder der Befestigung dienenden Endgliedern,
   dadurch gekennzeichnet,
   daß die beiden Endglieder (2,3,13,21) durch ein Seil (5) fest miteinander verbunden sind, daß zwischen den beiden Endgliedern (2,3,13,21) eine Vielzahl von hülsenartigen und gegeneinander zentrierbaren Einzelgliedern (6), deren Gesamtlänge kürzer als der Abstand zwischen den beiden Endgliedern (2,3,13,21) ist, auf dem Seil (5) aufgereiht sind und daß zumindest ein Glied (2,3,13,21) als Spannglied ausgebildet ist, durch das alle Einzelglieder (6) sowohl untereinander als auch mit den beiden Endgliedern (2,3,13,21) bei gleichzeitiger Spannung des Seiles (5) verspannbar sind.

2. Stange nach Anspruch 1,
   dadurch gekennzeichnet,
   daß zumindest ein Endglied (2,3,13,21) als Spannglied ausgebildet ist.

3. Stange nach Anspruch 1 oder 2,
   dadurch gekennzeichnet,
   daß dem Spannglied (13) ein in seiner Wirklänge veränderbares Glied (21) zugeordnet ist.

4. Stange nach Anspruch 3,
   dadurch gekennzeichnet,
   daß das in seiner Wirklänge veränderbare Glied (21)
   durch ein Endglied gebildet ist.

5. Stange nach einem der Ansprüche 1 - 4,
   dadurch gekennzeichnet,
   daß das Spannglied (2,3,13,21) aus einem Gewindezapfen (9,16), einer Spannmutter (10,17) und gegebenenfalls einer Spannhülse (12) besteht.

6. Stange nach Anspruch 5,
   dadurch gekennzeichnet,
   daß der Gewindezapfen (9,16) hohl ausgebildet ist.

7. Stange nach einem der Ansprüche 1 - 4,
   dadurch gekennzeichnet,
   daß das Spannglied als Zahnstange mit zugeordneter
   Ratsche ausgebildet ist.

8. Stange nach einem der Ansprüche 1 - 7,
   dadurch gekennzeichnet,
   daß die hülsenartigen Einzelglieder (6) an einer
   Stirnfläche eine umlaufende Vertiefung (8) und an
   der anderen Stirnfläche einen umlaufenden, der Vertiefung (8) angepaßten Vorsprung (7) aufweisen.

9. Stange nach einem der Ansprüche 1 - 8,
   dadurch gekennzeichnet,
   daß die hülsenartigen Einzelelemente (6) hohlzylindrischen Querschnitt aufweisen.

Fig. 1

Fig. 2

Fig. 3

Fig. 4

2/2

0189075